# EUROPEAN PATENT SPECIFICATION

(11) **EP 2 880 996 B1**
(45) Date of publication and mention of the grant of the patent: **12.04.2017**
(21) Application number: 13382497.9
(22) Date of filing: 09.12.2013
(51) Int. Cl.: A23L 2/66, A23L 33/17

(54) **NUTRITIONAL COMPOSITIONS CONTAINING BROWN RICE PROTEIN**
NAHRUNGSZUSAMMENSETZUNGEN MIT BRAUNREISPROTEIN
COMPOSITIONS NUTRITIONNELLES CONTENANT DES PROTÉINES DE RIZ BRUN

(43) Date of publication of application: 10.06.2015
(73) Proprietor: ABBOTT LABORATORIES, Abbott Park, IL 60064-3500 (US)
(72) Inventor: López Pedrosa, Jose María, 18190 Cenes de la Vega (Granada) (ES); Martin Martin, María Jesús, 18006 Granada (ES)
(74) Representative: Boult Wade Tennant

(56) References cited:
- WO-A1-2010/126353
- WO-A1-2011/093693
- WO-A1-2013/148685
- WO-A1-2013/148688
- US-A- 5 514 656
- US-A1- 2012 288 588

## Description

### BACKGROUND OF THE INVENTION

Nutrition shakes, i.e., non-carbonated liquid nutritional compositions which are intended for oral consumption and therefore have the consistency, flavor and overall desirable sensory characteristics of common every-day milk shakes, are widely-available consumer products. Examples include the Ensure^{®}, Glucerna^{®}, Myoplex^{®} and Pediasure^{®} line of nutrition shakes available from Abbott Nutrition of Columbus, Ohio, the Muscle Milk^{®} line of nutrition shakes available from CytoSport, Inc. of Benicia, California, and the Resource^{®} line of health shakes available from Nestle, S.A. of Vevey, Switzerland. Generally, they contain balanced amounts of macronutrients (proteins, fats and carbohydrates) as well as micronutrients and flavorings, and are made up in the form of oil-in-water emulsions having the consistency of common every-day milk shakes.

To reduce costs, vegetable proteins may be used as part of the protein component of such compositions. Soy protein is especially preferred, due to its relatively low cost, agreeable texture and faint flavor. However, experience has shown that the amount of vegetable protein in such compositions, as a percentage of total protein, should be limited to a maximum of about 30 wt.%, even if soy protein is used. This is because both flavor and stability, both short term and long term, begin to suffer at higher concentrations.

To reduce costs even further, recently published WO 2010/126362 A1 to Hofman et al., recommends that intact pea protein, which is even less expensive than soy protein, be used to replace a portion of the protein in such compositions. Pea protein has been used for years as a partial protein source in liquid nutritional compositions. However, pea protein is known to adversely affect the desirable properties a nutrition shake must have to be commercially successful such as stability, flavor, texture, mouth feel, odor, overall liking and so forth. Accordingly, the challenge in using intact pea protein to reduce the cost of making such compositions is not merely replacing a portion of its existing protein with intact pea protein, but rather doing so in a way which does not adversely affect its other desirable properties.

The '362 published application does not address these issues, since its clear focus is on nutritional compositions for tube feeding. Furthermore, its specific disclosure indicates that the animal protein of its compositions should be composed of a large excess of whey protein, *i.e.,* about 35 wt.% whey protein and 25 wt.% casein, based on total protein. This means that significant amounts of additional whey protein, typically in the form of whey protein concentrate (WPC) or whey protein isolate (WPI), need to be added to achieve this requirement, since the natural distribution of milk proteins in milk is about 20 wt.% whey protein and 80 wt.% casein. Whey protein is more expensive than other types of milk proteins, and much more expensive than pea and other vegetable proteins. Therefore, using large amounts of whey protein as taught by this document defeats the underlying purpose of using pea protein to reduce costs.

Commonly assigned international application S.N. PCT/US 13/33883, describes another approach for increasing the concentration of vegetable protein in a nutrition shake without adversely affecting its desirable properties. As described there, the amount of vegetable protein in such compositions can be increased to levels as high as 55% or more, based on total protein, without requiring that additional amounts of whey protein be added, by using both intact pea protein and intact soy protein as the vegetable protein source, but only if (a) the combined amount of intact pea protein and intact soy protein represents about 32 to 55 wt.% of total protein, (b) the amount of intact pea protein represents about 14 to 90 wt.% of the combined amount of intact soy protein and intact pea protein, (c) the amount of milk protein represents about 40 to 68 wt.% of total protein, and (d) at least 80 wt.% of the milk protein is supplied in the form of a natural milk protein concentrate (MPC), i.e., a milk protein concentrate containing about 70 to 90 wt.% milk proteins and a natural distribution of whey protein and casein (*i.e.,* a whey protein/casein ratio between about 10:90 and 30:70).

WO 2013/148688 A1 discloses a nutritional composition in which the protein component comprises from about 1% to about 50% by weight of intact pea protein.

### SUMMARY OF THE INVENTION

In accordance with this invention, it has been found that the amount of vegetable protein in nutritional compositions can be increased to levels as high as 65% or more, based on total protein, without adversely affecting desirable properties such as nutritional value, stability, flavor and mouth feel, and also without requiring that additional amounts of whey protein be added, by selecting as the vegetable proteins to be used for this purpose the combination of soy protein, intact brown rice protein and intact pea protein.

Thus, this invention provides a nutrition shake comprising a protein component in an amount of from 1.0% to 20% by weight, a carbohydrate component in an amount of from 5.0% to 65% by weight, and a fat component in an amount of from 1.0% to 20% by weight, the percents being based on the weight of the nutrition shake as a whole, wherein the protein component comprises (i) 10 to 60 wt.% milk protein, (ii) at least 5 wt.% intact brown rice protein, (iii) 10 to 25 wt.% (preferably, 10 to 15 wt.%) intact pea protein, and (iv) a protein remainder composed primarily of soy protein, these percents being based on total protein, wherein the combined amounts of intact brown rice protein and protein remainder comprises 40 to 80% of total protein.

### DETAILED DESCRIPTION

### Definitions and Conventions

For the purposes of this disclosure, the following terms have the following meanings unless context dictates otherwise:
"Aseptic packaging" refers to the manufacture of a packaged product without reliance upon a retort packaging step as described below, wherein the liquid nutritional composition and package are sterilized separately prior to filling, and then are combined under sterilized or aseptic processing conditions to form a sterilized, aseptically packaged, liquid nutritional product.

"Fat" and "oil" as used herein are used interchangeably to refer to lipid materials derived or processed from vegetables or animals. These terms also include synthetic lipid materials so long as such synthetic materials are suitable for oral administration to humans. As well known, such materials are normally composed of mixtures of fatty acid triglycerides, which mixtures may also contain fatty acid diglycerides and monoglycerides and even some free fatty acids.

"Intact protein" or "intact protein source" refers to a protein or protein source which is unhydrolyzed.

"Intact protein source" or "source of intact protein" refers to a source of protein which has not been subjected to a specific treatment whose primary purpose is to hydrolyze unhydrolyzed proteins.

"Nutritional composition" or "nutritional product" refers to nutritional liquids, nutritional powders which may be reconstituted to form a nutritional liquid, nutritional puddings, nutritional gels, nutrition bars, and other nutritional products all of which comprise one or more of fat, protein, and carbohydrate and are suitable for oral consumption by a human.

"Nutrition shake" refers to a liquid nutritional composition that is intended for oral consumption by the ordinary consumer and hence is formulated, manufactured, packaged and sold in the form of a viscous liquid having the pleasing flavor and the consistency of a conventional milk shake.

"Retort packaging" and "retort sterilizing" are used interchangeably herein and refer to the common practice of filling a container, most typically a plastic or metal can or other similar package, with a liquid nutritional composition and then subjecting the liquid-filled package to the necessary heat sterilization step to form a sterilized, retort packaged, liquid nutritional product.

"Shelf stable" refers to a liquid nutritional composition that remains commercially stable after being packaged and then stored at 18-24° C for at least 3 months.

"Total protein" in connection with the amount of protein in a particular composition means all the protein in that composition.

All percentages, parts and ratios as used herein, are by weight of the total composition, unless otherwise specified. All such weights as they pertain to listed ingredients are based on the active level and, therefore, do not include solvents or by-products that may be included in commercially available materials, unless otherwise specified.

All references to singular characteristics or limitations of the present disclosure shall include the corresponding plural characteristic or limitation, and vice versa, unless otherwise specified or clearly implied to the contrary by the context in which the reference is made.

All combinations of method or process steps as used herein can be performed in any order, unless otherwise specified or clearly implied to the contrary by the context in which the referenced combination is made.

The compositions of this disclosure may also be substantially free of any optional or selected ingredient or feature described herein. In this context, "substantially free" means that the selected nutritional composition contains less than a functional amount of the optional ingredient, typically less than 1%, including less than 0.5%, including less than 0.1%, and also including zero percent, by weight of such optional or selected ingredient.

In addition, the compositions of this disclosure may comprise, consist of, or consist essentially of the recited elements, as described herein.

### Product Form

The nutritional compositions of this invention include ready-to-feed liquids, concentrated liquids, liquids derived from nutritional powders (reconstituted liquids), powders, and other solids such as nutrition bars. These liquid compositions may include solutions (including clear solutions), suspensions, and emulsions. The powders that are reconstituted to produce a liquid may include any flowable or scoopable particulate solid that can be diluted with water or other aqueous liquid to form a nutritional liquid prior to use.

The nutritional compositions may be formulated with sufficient kinds and amounts of nutrients to provide a sole, primary, or supplemental source of nutrition, or to provide a specialized nutritional product for use in individuals afflicted with specific diseases or conditions or with a targeted nutritional benefit.

### Nutritional Powders

The nutritional powders may be reconstituted by the intended user with a suitable aqueous liquid, typically water or other aqueous liquid, in an amount or volume sufficient to form a nutritional liquid for immediate oral use. In this context, "immediate" use generally means within about 48 hours, more typically within about 24 hours, most typically right after or within 20 minutes of reconstitution. Further, when reconstituted, the nutritional powders provide the desired ingredient concentrations as described hereinafter for the nutritional liquid embodiments.

The nutritional powders may include spray dried powders, dry mixed powders, agglomerated powders, combinations thereof, or powders prepared by other suitable methods.

### Nutritional Liquids

The nutritional liquids may be formulated in a variety of forms, including emulsions such as oil-in-water, water-in-oil, or complex aqueous emulsions, although such emulsions are most typically in the form of oil-in-water emulsions having a continuous aqueous phase and a discontinuous oil phase, suspensions, or clear or substantially clear liquids.

The nutritional liquids may be and typically are shelf stable. The nutritional liquids typically contain up to 95% by weight of water, including from about 50% to 95%, also including from about 60% to about 90%, and also including from about 70% to about 85%, of water by weight of the nutritional liquid.

### Macronutrient Balance

The inventive nutritional compositions contain proteins, fats and carbohydrates in proportions which are suitable for satisfying the nutritional needs of the consumer or patient for which they are intended. Such proportions are well known in the art, and any conventional proportion can be used.

This invention is especially useful in connection with formulating nutrition shakes, i.e., liquid nutritional compositions that are intended for oral consumption by the ordinary consumer and hence are formulated to have a pleasing flavor and the consistency of a conventional milk shake, as well as powders and concentrates which can be combined with water to form such nutrition shakes. A variety of nutrition shakes are well known commercial products, including those especially formulated for promoting muscle growth, those especially formulated to provide balanced nutritional supplements for normal adults, those especially formulated for diabetic adults and those formulated especially for children (*e.g.,* ages 1 to 6) both as supplements as well as sole source foodstuffs. Broadly speaking, these nutrition shakes when in a ready to feed condition contain protein in an amount of from 0.5% to 20% by weight, carbohydrate in an amount of from 0.5% to 35% by weight, and fat in an amount of from 0.1% to 25% by weight, with the particular balance of these macronutrients depending on the specific purpose for which a particular shake is formulated.

Thus, such compositions when in a ready to use condition typically contain concentrations of these macronutrients as set forth in the following Tables 1 to 4, with the percentages shown being based on the entire weight of each composition:

**Table 1**

| Nutrition Shakes-Muscle Building Formulations Macronutrient Breakdown | | | | | | |
|---|---|---|---|---|---|---|
| | wt.%, based on entire composition | | | Calorie % | | |
| Operative | Protein 3-20 | Carbs 0.5-15 | Fat 1-10 | Protein 35-75 | Carbs 5-40 | Fat 5-40 |
| Desirable | 5-15 | 1-10 | 0.3-5 | 45-70 | 10-35 | 10-35 |
| More Desirable | 6-10 | 2-6 | 0.5-2 | 40-65 | 15-30 | 15-30 |
| Especially Desirable | 6-10 | 3-5 | 0.7-1.5 | 54-58 | 21-25 | 19-23 |

**Table 2**

| Nutrition Shakes-Balanced Adult Supplement Macronutrient Breakdown | | | | | | |
|---|---|---|---|---|---|---|
| | wt.%, based on entire composition | | | Calorie % | | |
| | Protein | Carbs | Fat | Protein | Carbs | Fat |
| Operative | 0.5-15 | 10-30 | 0.5-10 | 2-30 | 30-90 | 6-45 |
| Desirable | 1.4-8.5 | 11-25 | 1-7 | 6-25 | 40-80 | 10-40 |
| More Desirable | 2-7 | 13-24 | 1.5-6 | 10-20 | 45-75 | 15-35 |
| Especially Desirable | 2.9-5.8 | 14-20 | 2-5 | 12-17 | 50-70 | 20-31 |

**Table 3**

| Supplement for Diabetics Macronutrient Breakdown, wt.% | | | | | | |
|---|---|---|---|---|---|---|
| | wt.%, based on entire composition | | | Calorie % | | |
| | Protein | Carbs | Fat | Protein | Carbs | Fat |
| Operative | 0.5-15 | 5-35 | 0.5-20 | 10-40 | 20-70 | 15-55 |
| Desirable | 1-10 | 7-20 | 0.7-15 | 12-35 | 30-60 | 20-45 |
| More Desirable | 2-7 | 8-15 | 1-10 | 15-30 | 35-55 | 25-40 |
| Especially Desirable | 3-5 | 9-12 | 1.5-5 | 18-25 | 40-50 | 30-35 |

**Table 4**

| Nutrition Shakes-Children's Drink Macronutrient Breakdown | | | | | | |
|---|---|---|---|---|---|---|
| | wt.%, based on entire composition | | | Calorie % | | |
| | Protein | Carbs | Fat | Protein | Carbs | Fat |
| Operative | 0.5-10 | 4-40 | 1-25 | 2-40 | 30-80 | 15-55 |
| Desirable | 0.7-7 | 6-30 | 1.2-20 | 4-30 | 40-70 | 20-45 |
| More Desirable | 1-6 | 8-20 | 1.5-15 | 7-20 | 45-65 | 25-40 |
| Especially Desirable | 2-4 | 10-15 | 2-7 | 10-15 | 50-60 | 30-35 |

### Carbohydrates

Any carbohydrate or source thereof that is suitable for use in oral nutritional products and is compatible with the other ingredients of the inventive compositions can be used as the carbohydrate of the inventive nutritional compositions. Specific examples include maltodextrin (and specifically low DE Maltodextrin such as DE10 maltodextrin), corn maltodextrin, sucromalt, maltitol, maltitol powder, glycerine, glucose polymers, corn syrup, corn syrup solids, rice-derived carbohydrates (*e.g.,* tapioca dextrin), isomaltulose, sucrose, extra fine white sugar, glucose, fructose, lactose, high fructose corn syrup, honey, sugar alcohols (*e.g.,* maltitol, erythritol, sorbitol), artificial sweeteners (*e.g.,* sucralose, acesulfame potassium), natural sweeteners (*e.g.,* stevia, monk fruit), high potency potientiators, fructooligosaccharides, soy fiber, corn fiber, guar gum, konjac flour, polydextrose, Fibersol, and combinations thereof.

Normally, the carbohydrate component of the inventive nutritional compositions will contain both starches and sugars. If so, the amount of sugar in nutritional compositions especially formulated for promoting muscle growth in adults may desirably represent about 1% to about 20%, about 3% to about 10%, or even about 4% to about 8%, by weight, of the total amount of carbohydrates in the composition. Similarly, the amount of sugar in nutritional compositions especially formulated to provide balanced nutritional supplements for normal adults, as well as for diabetic adults, may desirably represent about 10% to about 35%, about 15% to about 30%, or even about 20% to about 25%, by weight, of the total amount of carbohydrates in the composition. In addition, the amount of sugar in nutritional compositions especially formulated for children (e.g., ages 1 to 16), both as supplements as well as sole source foodstuffs, may desirably represent about 30% to about 70%, about 40% to about 65%, or even about 50% to about 60%, by weight, of the total amount of carbohydrates in the composition.

### Fat

Any fat or source thereof that is suitable for use in oral nutritional products and is compatible with the other ingredients of the inventive compositions can be used as the fat of the inventive nutritional compositions. Desirably, a fat source will provide at least one long chain polyunsaturated acid (LC-PUFA) such as DHA, ARA, and/or EPA, although these LC-PUFAs may be optionally added to the nutritional compositions outside of, or in addition to, the fat source.

Non-limiting examples of suitable fats or sources thereof for use in the nutritional compositions of this invention include coconut oil, fractionated coconut oil, soy oil, corn oil, olive oil, safflower oil, high oleic safflower oil, MCT (medium chain triglycerides) oil, sunflower oil, high oleic sunflower oil, palm and palm kernel oils, palm olein, canola oil, marine oils, cottonseed oils, and combinations thereof.

### Protein

In addition to fats, carbohydrates and optional ingredients as more fully discussed below, the inventive nutritional compositions contain proteins. Traditionally, milk proteins have been the proteins of choice for making a wide variety of different nutritional compositions. For various reasons, however, including cost, efforts have been undertaken to replace some or all of these milk proteins with vegetable proteins. The problem, however, is that vegetable proteins normally exhibit a negative effect on the desirable properties that nutritional compositions exhibit including flavor, odor, viscosity (in the case of liquids), texture, short term stability, long term (shelf) stability and nutritional value. In accordance with this invention, it has been found that particular combinations of particular vegetable proteins can be used to reduce the total amount of dairy proteins needed in such compositions protein without adversely affecting their taste, nutritional value and other hedonic properties including appearance and mouthfeel (creaminess, viscosity). Specific proteins that can be used to make the nutritional compositions of this invention are more fully discussed below:

### Milk Protein

The inventive nutritional compositions contain a substantial amount of milk or dairy protein.

Milk proteins that are useful in this invention can be obtained from the milk of many different mammals including cows, sheep, goats, horses, buffalos, camels, etc. Milk proteins derived from cow's milk are preferred due to availability and cost.

There are two basic types of milk proteins, casein and whey. They naturally occur in a weight ratio of about 20 wt.% whey and 80 wt.% casein in the milk of most mammals, including cow's milk.

Milk proteins are commercially available in a variety of different forms. Examples include milk protein isolates, concentrates, caseinates, whey isolates or concentrates, milk, non-fat dry milk, and condensed skim milk, micellar proteins such as micellar caseins and micellar milk protein concentrate all of which are useful in this invention. In some forms, the natural distribution of whey and casein is preserved. In other forms, the whey or the casein is concentrated relative to the other.

Whey protein is commercially available as liquid whey or in powder form as whey protein isolate (WPI) or whey protein concentrate (WPC). All have an elevated whey protein/casein ratio relative to whole milk. WPC is normally produced by membrane filtration. It is rich in whey proteins, but also contains other components such as fat, lactose and, in the case of whey protein produced from cheese, glycomacroprotein (GMP), a casein-related non-globular protein. In contrast, WPI consists primarily of whey proteins with minimal amounts of fat and lactose. WPI usually requires a more rigorous separation process such as a combination of microfiltration and ultra-filtration or ion exchange chromatography. It is generally understood that WPI refers to a mixture in which at least 90 weight % of the solids are whey proteins. A WPC is understood as having a percentage of whey proteins between the initial amount in the by-product (about 12 weight %) and a WPI. In particular, sweet whey, obtained as a by-product in the manufacturing of cheese, acid whey, obtained as a by-product in the manufacturing of acid casein, native whey, obtained by milk microfiltration or rennet whey, obtained as a by-product in the manufacturing of rennet casein, may be used alone or in combination as a source of globular whey proteins.

Casein separates from milk when milk is curdled, a process commonly carried out in the manufacturing of cheese, and is commonly called caseinate, having lost its typical micellar structure. Casein is most commonly bound to calcium (Ca²⁺) and sodium (Na⁺) since all of these ions are found naturally in milk, or even potassium (K⁺) or magnesium (Mg²⁺), and tend to stick to the casein during the extraction process. Nutritionally, these compounds are basically interchangeable, as all forms of casein are effective protein sources. Micellar casein refers to casein in the form of native micelles. It is a high quality milk protein and naturally occurring in milk in a concentration of about 2.6 g/100 ml. It is concentrated by a process that does not, or does not substantially, denature the casein proteins and it is marketed as Micellar Casein Isolate (MCI). Fresh skim milk is subjected to a microfiltration process, in much the same process used to concentrate whey protein, to produce a pure, substantially undenaturated milk protein with its native structure. The resulting material contains between 90% and 95%, preferably more than 95% by weight of micellar casein, the rest mainly being whey protein and other non-protein nitrogen and other constituents, such as lactose and inorganic salts, in particular calcium phosphate.

Two milk protein sources in which the natural distribution of whey and casein is essentially preserved are milk protein concentrate (MPC) and milk protein isolate (MPI). MPC and MPI are products in which a substantial amount of the water and fat in whole milk have been removed. MPIs are further characterized in that a significant portion of the lactose has also been removed. As a result, the concentration of milk proteins in an MPI is normally greater than that found in a typical MPC, although this is not always the case.

For the purposes of this disclosure, therefore, MPC will be understood to be a generic term, which includes MPI as a specie thereof. Thus, MPC will be understood to refer to a milk protein product in which greater than 55% of the non-fat solids in the product are milk proteins, with the ratio of whey proteins to casein in the product being between 2:98 and 50:50. More commonly, more than 75 wt.% of the non-fat solids in the product are milk proteins, with the ratio of whey proteins to casein being between 10:90 and 30:70, even most typically between 10:90 and 20:80.

Milk protein isolates (MPIs) will be understood to mean a type of MPC in which at least 85 wt.% of the non-fat solids in the product are milk proteins, the lactose content is 5 wt.% or less, the fat content is less than 3 wt.%, the ash content is 8 wt.% or less, and the water content is less than 6 wt.%. Commercially available MPIs typically contain about 85-90 wt.% (or more) protein, about 2-5 wt.% lactose, minimal fat (*i.e*., 1-3 wt.%) and about 5-6 wt.% water.

In some embodiments of this invention, a conventional milk protein concentrate (MPC), *i.e*., milk protein concentrate containing about 70 to 90 wt.% milk proteins and a natural distribution of whey and casein (*i.e*., whey protein/casein ratios between about 10:90 and 30:70), is used to supply most or even all of the milk proteins in the inventive nutritional compositions. Preferably, the natural milk protein concentrate contains about 75 to 85 wt.% protein and has a whey protein/casein ratio between about 10:90 and 20:80. These milk protein sources are preferred, because they are relatively inexpensive, readily available, have a preferred flavor profile, and exhibit a beneficial effect on product stability. In addition, they already exhibit a natural distribution of whey protein and casein, *e.g*., about 20/80 on a weight basis.

### Concentrated Soy Protein Product

In some embodiments of this invention, the inventive nutritional compositions also contain soy protein. Both intact soy protein and hydrolyzed soy protein sources can be used. In this context, "intact" in connection with a protein means that the protein is unhydrolyzed. In contrast, "intact" in connection with a protein source means that the protein source has not been subjected to a treatment whose primary purpose is to hydrolyze unhydrolyzed proteins, even though it may contain a significant amount of hydrolyzed proteins. In this regard, it is conventional in this industry to refer to a protein source which has been subjected to a treatment whose primary purpose is to hydrolyze unhydrolyzed proteins as a source of hydrolyzed proteins, *e.g.,* "hydrolyzed pea protein concentrate." In contrast, when a protein source has not been subjected to such a treatment, it is conventional practice to refer to this product as a source of unhydrolyzed or intact proteins, or more commonly to say nothing about the hydrolysis of its proteins, even though a significant amount of the proteins therein may be in hydrolyzed form. For example, referring to a "soy protein concentrate," without more, connotes that this source has not been subjected to a treatment whose primary purpose is to hydrolyze its unhydrolyzed proteins, even though it is well known that as many as 50% of the proteins in this source may be in hydrolyzed form.

This conventional practice is followed in this disclosure. So, for example, reference to a milk protein concentrate (MPC), pea protein concentrate (PPC) or soy protein isolate (SPI) in this disclosure connotes that this protein source has not been subjected to a treatment whose primary purpose is to hydrolyze the unhydrolyzed proteins therein, even though it may contain a significant amount of hydrolyzed proteins due to naturally occurring phenomena. In contrast, reference to a protein (as opposed to a protein source) which is intact means that the protein itself is unhydrolyzed.

Soy protein is a vegetable protein that contains most essential amino acids in a relatively high proportion. Soy protein can be divided into different categories according to its production method. For the purposes of this disclosure, "soy protein concentrate" (SPC) will be understood to be a generic term referring to products which are basically soybean without the water soluble carbohydrates and which contain about 60 to 90 wt.% or more soy protein. More commonly, these products contain 60 to 85 wt.% soy protein, and even more typically 70 to 80 wt.% soy protein. Meanwhile, "soy protein isolate" (SPI) will be understood to mean a type of SPC which contains about 85 to 90 wt.% protein. SPI is the most refined form of soy protein and is mainly used in meat products to improve texture and eating quality. Textured soy protein (TSP) is made from soy protein concentrate by giving it some texture. TSP is available as dry flakes or chunks. It will keep its structure when hydrated. Hydrated textured soy protein chunks have a texture similar to ground beef. It can be used as a meat replacement or can be added to meat. Textured soy protein contains about 70 wt.% protein.

Any of these concentrated soy protein sources can be used to provide the intact soy protein of the nutrition shakes of this first aspect of the invention. Soy protein concentrates and isolates containing about 70 to 87 wt.% protein are preferred.

Several soy protein sources are readily available to the skilled person, for example, from The Solae Company of St. Louis, Mo., USA, and the Arthur Daniels Midland Company of Decatur, Illinois, USA.

### Pea Protein

In some embodiments, the inventive nutritional compositions contain pea protein. Both intact and hydrolyzed pea protein sources can be used. Particularly suitable pea proteins for use in the inventive nutritional compositions include pea proteins derived from *Pisum sativum.* Pea proteins derived from other species of peas, including green peas and field peas, can also be used.

Pea protein is commercially available in the form of pea protein concentrates (PPC) and pea protein isolates (PPI). For the purposes of this disclosure, PPC will be understood to refer to concentrated pea protein sources containing 60 to 90 wt.% pea protein. Meanwhile, PPI will be understood to refer to a PPC which contains 80 to 90 wt.% pea protein. These PPCs and PPIs typically exhibit one or more of the following attributes: (1) poured bulk density, as measured by gravimetry, of about 0.4 Kg/L; (2) a pH in a 10% solution of water of about 7; (3) a residue on a 70 mesh screen as measured by sieving of a maximum of 10% by weight; (4) a carbohydrate concentration of about 3 grams per 100 grams of intact pea protein; (5) a fat concentration of about 6 grams per 100 grams of intact pea protein; and/or (6) an ash concentration of about 4 grams per 100 grams of intact pea protein.

One suitable commercially available intact pea protein concentrate that can be used to make the nutritional compositions of this disclosure and which is based on *pisum sativum* is NUTRALYS® F85F pea protein isolate (about 83% by weight intact pea protein), available from Roquette Freres, Lestrem France. Another source for intact pea protein based on *pisum sativum* is Cosucra Groupe Warcoing of Warcoing, Belgium.

### Rice Protein

In some embodiments of this invention, the inventive nutritional compositions also contain rice protein. Rice proteins derived from both Asian rice (*Oryza sativa*) and African rice (*Oryza glabemma*) can be used. These proteins can be either in white rice form or brown rice form. That is to say, both white rice proteins and brown rice proteins can be used to make the inventive nutritional compositions.

As is well-known, brown rice, which is sometimes referred to as "hulled" or "unmilled" rice, is whole grain rice, i.e., rice in which the hull has been removed but the bran and the germ have not. In contrast, white rice is rice in which the hull, bran and germ have all been removed.

Brown rice protein is commercially available in the form of brown rice protein concentrates and isolates. These sources are available from a wide variety of different manufacturers including Nutribiotic, Jarrow Formulas, Vitacost, Sunwarrier, and Axiom Foods and AIDP (sprouted brown rice). All can be used to make the nutritional compositions of this invention.

A particularly interesting source for intact brown rice protein for use in this invention is the ORYZATEIN™ line of brown rice protein powders sold by Axiom Foods, Inc. of Los Angeles, California and distributed by Prinova, USA of Carol Stream, Illinois. These protein powders, which contain 70%, 80% and 90% protein, are especially useful in making stable liquid suspensions.

Like brown rice protein, white rice protein is also commercially available in the form of white rice protein concentrates and isolates. These products are available from a wide variety of different commercial sources including Shanghai Freemen Chemicals Company, LLC. of Shanghai, China. All can be used to make the nutritional compositions of this invention.

A particularly interesting source for white rice protein for use in this invention is the Gabioten line of white rice protein products sold by Shanghai Freemen. These products, which are available in powder form containing 70%, 80% and 90% protein, are especially suitable for use in this invention, especially the powder containing 90% protein.

Both of these rice proteins, *i.e*., both the brown rice proteins and the white rice proteins, can be used in hydrolyzed form as well as in intact form. If used in hydrolyzed form, hydrolysis of these rice proteins can be accomplished by any known technique to a degree of hydrolysis which will normally be about 1 to 50%, more desirably about 2 to 20% or even about 5 to 15%.

Hydrolyzed rice proteins are commercially available in the form of concentrates and isolates containing 70%, 80% and 90 % protein, and having degrees of hydrolyzation ranging anywhere from 1 to 50%. For example, such products are available from a wide variety of different commercial sources including Axiom and Suan Pharma. All can be used to make the nutritional compositions of this invention.

### Potato Protein

In some embodiments of this invention, the inventive nutritional compositions contain potato protein.

Both intact and hydrolyzed versions of these potato proteins can be used, with the degree of hydrolysis of the hydrolyzed versions ranging from about 1 to 20 %, more desirably about 5 to 15 %, or even about 5 to 10 %.

Potato proteins are commercially available in the form of concentrates and isolates containing 80% to 95% protein. They are available, for example, from Solanic, which is a subsidiary of AVEBE of Veedam, The Netherlands.

### Free Amino Acids

In addition to the above proteins, fats and carbohydrates, the inventive nutritional compositions can also contain free amino acids, if desired. Examples include L-arginine, L-cysteine, L-glutamine, L-leucine, L-proline, valine, isoleucine, and L-tryptophan. Particularly suitable free amino acids include L-arginine and L-glutamine. Desirable branched chain amino acids include leucine, isoleucine, and valine.

These free amino acids may also be present in salt form (e.g., L-arginine hydrochloride), peptide-bound form (e.g., L-alanyl-L-glutamine), and protein-bound form (e.g., bovine beta-lactoglobulin, which includes 2.85 wt.% arginine, 7.18 wt.% glutamine and 15.76 wt.% leucine). Although all of these forms are suitable and within the scope of this invention, the free form is particularly suitable as it is the most concentrated and the addition rate of the free acids into the nutritional composition can be easily controlled.

The total amounts of these free amino acids in the inventive nutritional compositions should not exceed 5 grams/100 ml. More desirably, the amount of free amino acids in the inventive nutritional compositions is ≤ 2 grams/100 ml., more desirably ≤ 1 gram/100 ml. or evens ≤ 0.5 gram/100 ml.

### Optional Ingredients

The inventive nutritional compositions may further comprise other optional ingredients that may modify their physical, chemical, hedonic or processing characteristics or serve as pharmaceutical or additional nutritional components when used in the targeted population. Many such optional ingredients are known or otherwise suitable for use in other nutritional compositions and may also be used in the nutritional compositions described herein, provided that such optional ingredients are safe and effective for oral administration and are compatible with the essential and other ingredients in the selected product form.

For example, in addition to the proteins mentioned above, the inventive nutritional compositions can contain other proteins that are useful in formulating nutritional compositions.

In some embodiments of this invention, the inventive nutritional compositions additionally comprise beta-hydroxy-beta-methylbutyrate (HMB), and preferably calcium HMB, which means that the nutritional compositions are either formulated with the addition of calcium HMB, most typically as a monohydrate, or are otherwise prepared so as to contain HMB in the finished composition. Any source of HMB is suitable for use herein provided that the finished product contains HMB, although such a source is preferably calcium HMB and is most typically added as such to the nutritional compositions during formulation.

Although calcium HMB monohydrate is the generally preferred source of HMB for use in the nutritional compositions disclosed herein, other suitable sources may include HMB as the free acid, a salt, an anhydrous salt, an ester, a lactone, or other product forms that otherwise provide a bioavailable form of HMB from the nutritional compositions. Non-limiting examples of suitable salts of HMB for use herein include HMB salts, hydrated or anhydrous, of sodium, potassium, magnesium, chromium, calcium, or other non-toxic salt form. Calcium HMB monohydrate is preferred and is commercially available from Technical Sourcing International (TSI) of Salt Lake City, Utah.

The concentration of HMB in the nutritional compositions may range up to 10%, including from about 0.01% to about 10%, including from about 0.01% to about 8%, and also including from about 0.08% to about 5.0%, including from about 0.08% to about 3%, including from about 0.1% to about 2.5%, by weight of the nutritional composition. In some specific embodiments, the nutritional compositions include about 0.38% or about 0.71%, by weight HMB.

The nutritional compositions of the present disclosure desirably include sufficient HMB to provide an individual with from about 0.1 grams to about 10 grams, including from about 0.5 grams to about 10 grams, including from about 1 gram to about 8 grams, including from about 2 grams to about 7 grams, and also including from about 3 grams to about 6 grams, per day of HMB. In one specific embodiment, the daily intake of HMB by the individual is about 3 grams. The total daily HMB may be contained in one, two, three, or more servings of the nutritional composition.

Further non-limiting examples of optional ingredients include preservatives, antioxidants, emulsifying agents, buffers, pharmaceutical actives, additional nutrients as described herein, colorants, flavors, thickeners (*e.g*., induced viscosity fibers), additional stabilizers, cereal beta-glucans (barley beta-glucan), probiotics (*e.g.,* Lactobacillus rhamnosus HN001 (DR20)), prebiotics (fructooligosaccharides, galactooligosaccharides, inulin, oligofructose), Salacia extract, and so forth.

The inventive nutritional compositions may further comprise vitamins or related nutrients, non-limiting examples of which include vitamin A, vitamin D, vitamin E, vitamin K, thiamine, riboflavin, pyridoxine, vitamin B12, carotenoids, niacin, folic acid, pantothenic acid, biotin, vitamin C, choline, inositol, salts, and derivatives thereof, and combinations thereof.

The inventive nutritional compositions may further comprise minerals, non-limiting examples of which include phosphorus, magnesium, calcium, iron, zinc, manganese, copper, sodium, potassium, molybdenum, chromium, selenium, chloride, and combinations thereof.

The inventive nutritional compositions may also include one or more flavoring or masking agents. Suitable flavoring or masking agents include natural and artificial sweeteners, sodium sources such as sodium chloride, and hydrocolloids, and combinations thereof. Nutritional compositions which are made with vanilla, chocolate or strawberry flavoring agents are especially preferred.

The inventive nutritional compositions may also include fish oil masking agents to mask "fishy" type flavors/aroma notes that commonly occur with the presence of fish/marine oil. For example, in some embodiments, the inventive nutritional compositions may include the lipid-amylose complex described above. Specifically, the combination of monoglycerides and low DE glucose polymers, such as DE-1 maltodextrin, form a lipid-amylose complex that can bind to oxidation products such as the fatty acid chain of aldehydes or ketones formed during oxidation of marine oils.

### Methods of Manufacture

The inventive nutritional compositions may be manufactured by any known or otherwise suitable method. Inventive nutritional compositions in liquid form may be suitably sterilized either by aseptic sterilization or by retort sterilization.

In those embodiments of the invention in which the inventive nutritional compositions are in the form of a nutrition shake, they may be prepared by any of the well known methods of formulating such compositions by way of retort, aseptic packaging, or hot fill processing methods.

For example, in one suitable manufacturing process for formulating a nutrition shake, at least three separate slurries are prepared, including a protein-in-fat (PIF) slurry, a carbohydrate-mineral (CHO-MIN) slurry, and a protein-in-water (PIW) slurry. The PIF slurry is formed by heating and mixing the oil (*e.g*., canola oil, corn oil) and then adding an emulsifier (*e.g*., lecithin), fat soluble vitamins, and a portion of the total protein (*e.g*., intact pea protein concentrate, milk protein concentrate) with continued heat and agitation. The CHO-MIN slurry is formed by adding with heated agitation to water: minerals (e.g., potassium citrate, dipotassium phosphate, sodium citrate), trace and ultra trace minerals (TM/UTM premix), thickening or suspending agent. The resulting CHO-MIN slurry is held for 10 minutes with continued heat and agitation before adding additional minerals (*e.g.,* potassium chloride, magnesium carbonate, potassium iodide), and/or carbohydrates (*e.g*., HMOs, fructooligosaccharide, sucrose, corn syrup). The PIW slurry is then formed by mixing with heat and agitation the remaining protein, if any.

The resulting slurries are then blended together with heated agitation and the pH adjusted to 6.6-7.0, after which the composition is subjected to high-temperature short-time (HTST) processing during which the composition is heat treated, emulsified and homogenized, and then allowed to cool. Water soluble vitamins and ascorbic acid are added, the pH is adjusted to the desired range if necessary, flavors are added, and water is added to achieve the desired total solid level. The composition is then aseptically packaged to form an aseptically packaged nutritional emulsion. This emulsion can then be further diluted, heat-treated, and packaged to form a ready-to-feed or concentrated liquid.

### Nutrition Shakes with Brown Rice Protein

This invention is directed primarily at formulating nutrition shakes. As indicated above, a nutrition shake is a liquid nutritional composition that is intended for oral consumption by the ordinary consumer and hence is formulated, manufactured, packaged and sold in the form of a viscous liquid having the pleasing flavor and the consistency of a conventional milk shake.

In accordance with this invention, a significant portion of the soy or other vegetable protein found in existing nutrition shakes that already exhibit a favorable combination of hedonic and other properties is replaced by the combination of intact brown rice protein and intact pea protein in a manner which (1) preserves these desirable properties, (2) enables the total amount of vegetable proteins in the composition to be increased to 40 wt% or more 65 wt.% or more, and (3) is accomplished without increasing the whey protein content of the compositions being modified in any significant way. In particular, in accordance with this invention, a substantial portion of the existing protein in these existing nutrition shakes is replaced with intact brown rice protein and intact pea protein in a manner which reduces their overall cost of manufacture, preferably by as much as 1.5 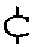 per 8 ounce serving (1.5 U.S. cents per 236.6 ml), while simultaneously retaining a viscosity of < 80 cps at 20°C, a graininess factor of < 2 and an overall likeability of > 6, all without increasing the whey protein content of the compositions being modified in any significant way. The net result is that the cost of manufacturing these products can be significantly reduced without compromising their commercial attractiveness and without increasing their whey protein content.

Viscosity is a well known property of liquid compositions. The viscosities of the nutrition shakes of this invention can be easily determined using a Brookfield viscometer, No. 1 Spindle. In accordance with this embodiment of the invention, the inventive nutrition shakes are formulated to have essentially the same viscosities as the commercial shakes being modified by the technology of this invention. A few of these commercial nutrition shakes have viscosities as high as 80 cps at 20°C. Most, however, have viscosities of < 50 cps, at 20°C. Accordingly, the inventive shakes are normally formulated in such a way that they exhibit viscosities of < 80 cps at 20°C, more commonly < 50 cps, < 40 cps, or even < 30 cps, at 20°C.

When proteins from different sources are included in the same nutritional composition, they tend to agglomerate over time. When a nutrition shake is used, this agglomeration manifests itself as small, distinct grains or particles which deposit on the side of a glass or container from which the nutrition shake is poured. To measure the degree or extent to which this phenomenon occurs, an analytical test has been developed in which a solid 1/16 inch diameter wire is formed into a loop measuring 1 inch in diameter. The loop is then dipped into the sample to be tested to form a flat film of product across the loop. The loop is then held up to a light source and visually rated for amount of protein particles present in the film, using a rating scale of 1 (best) to 6 (worst). In accordance with this invention, the nutrition shakes of this first aspect of this invention are formulated in such a way that they exhibit a graininess factor when measured by this analytical test of < 2. Preferably, the inventive nutrition shakes exhibit a graininess factor of < 1.5, or event ≤ 1.

Hedonic testing is a well known method of evaluating nutritional compositions for overall desirability. In a typical hedonic test, a group of subjects is asked to independently evaluate different samples for aroma, color, flavor, sweetness, thickness, mouthfeel, aftertaste, and overall liking. Each subject is then asked to rate each of these properties on the following 9 point Hedonic scale: 1 = Dislike Extremely; 5 = Neither Like or Dislike; 6 = Like Slightly; 7 = Like Slight to Moderately; 8 = Like Moderately; 9 = Like Extremely. The mean score for each property is then determined, which can provide an accurate assessment of the particular property being assessed. Depending on the number subjects used in the test, the property being assessed although subjective in nature can be objectively determined with a reasonable level of confidence. For example, in a hedonic evaluation carried out with a group of 100 subjects, the subjective properties mentioned above can be determined with a 95% confidence level.

In accordance with this invention, it is believed that the nutrition shakes of this invention will exhibit an overall liking score of > 5, at a confidence level of at least 95%. In the context of this invention, this suggests that these nutrition shakes should be regarded by the vast majority of the consuming public as exhibiting a neutral overall desirability. Preferably, these nutrition shakes will be formulated to exhibit an overall liking score of > 6, at a confidence level of at least 95%. In the context of this invention, this means that these nutrition shakes should be regarded by the vast majority of the consuming public as being more desirable than not.

Regarding cost issues, replacing some of the existing proteins found in a commercially attractive nutrition shake with a combination of intact brown rice protein and intact pea protein in accordance with this invention leads to a significant reduction in overall manufacturing costs. In some instances, depending on the particular commercial nutrition shake being modified, this reduction in cost can be ≥ 0.2 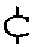 , ≥ 0.4 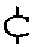 , ≥ 0.6 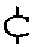 , ≥ 0.8 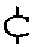 , ≥ 1 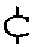 , ≥ 1.2 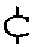 , and even ≥ 1.4 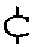 or more, per 8 ounce serving. This reduction in cost is due in part to the fact that brown rice and pea proteins have been less expensive than soy protein. In addition, this result is further due to the fact that, because of the particular way the nutrition shakes of this aspect of the invention are formulated, the total amount of less expensive vegetable proteins (brown rice plus pea plus soy) in these shakes can be increased to levels as high as 65 wt.% or more of total protein without adversely affecting their desirable hedonic properties and without using excessive amounts of whey protein. This level of vegetable protein is considerably higher than found in current commercial nutrition shakes, which level is generally limited to a maximum of about 30 wt.% of total protein.

In any event, the notion that a reduction in overall manufacturing costs of as much as 1.5 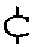 per 8 ounce can be achieved by this invention is based on the assumption that the difference in cost between the brown rice and pea protein sources, on the one hand, and the milk protein source used to formulate these compositions, on the other hand, is approximately $1.40 per pound protein, while the difference in cost between the brown rice and pea protein sources, on the one hand, and the soy protein source used to formulate these compositions, on the other hand, is approximately 15 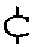 per pound protein.

In accordance with this invention, a significant portion of the existing proteins in commercially-attractive milk protein based nutrition shakes already containing soy protein is replaced with the combination of intact brown rice protein and intact pea protein in a manner which reduces their overall cost of manufacture by as much as 1.4 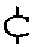 per 8 ounce serving (1.4 U.S. cents per 236.6 ml) or more without adversely affecting stability, taste or mouthfeel. Desirably, the viscosity of these nutrition shakes is retained at < 80 cps at 20°C, their graininess factor is retained at < 2 and their overall likeability is retained at > 5, preferably > 6. Moreover, these results are also accomplished without increasing the amount of whey protein in these nutrition shakes to any significant degree, which is necessary in accordance with the technology of WO 2010/126362 A1 to Hofman et al.

It is already known to use combinations of soy, rice and pea proteins in nutrition shakes. See, for example, U.S. 2008/0206430, U.S. 2009/0221502 and U.S. 2012/0128832. Moreover, there is even some suggestion in these disclosures that flavor is enhanced as a result of using such combinations. However, the nutrition shakes described there are vegan compositions which are entirely free of animal proteins. In addition, the claims of enhanced flavor made there are in comparison to nutrition shakes in which 100% of the protein content is soy protein.

Vegan nutrition shakes represent a different class of nutritional composition from the nutrition shakes of this invention in that the inventive nutrition shakes of these first two aspects still contain a significant amount of milk protein. In this regard, it is well known in industry that the flavor of nutritional compositions in which 100% of the protein content is vegetable based is poor in relation to the flavor of nutritional compositions containing a significant amount of milk proteins. Moreover, it is also well known in industry that there is a natural limit to the amount (proportion) of milk proteins that can be replaced by vegetable proteins in milk protein based nutritional compositions without compromising their commercially desirable features such as stability, taste and mouthfeel. In accordance with this invention in its first two aspects, it has been found possible to increase the total amount of vegetable proteins that can be introduced into such milk protein based nutrition shakes, without adversely affecting their stability, taste or mouthfeel, by suitable selection of the types and amounts of vegetable proteins used for this purpose.

In accordance with this invention, this advantageous result is accomplished by formulating the protein content of the inventive nutrition shakes to contain (a) 10 to 40 wt.% milk protein, (b) at least 5 wt.% intact brown rice protein, (c) 10 to 25 wt.% (preferably 10 to 15 wt.%) intact pea protein, and (d) a protein remainder composed primarily of intact soy protein, these percents being based on total protein, wherein the combined amounts of intact brown rice protein and protein remainder comprises 40 to 80% of total protein. Normally, at least 70 wt.% of the protein remainder, based on the weight of the protein remainder, will be composed of intact soy protein. More typically, at least 80%, at least about 90% and even at least about 95% of the protein remainder will be composed of intact soy protein. Most commonly, all of the protein remainder will be composed of intact soy protein.

An important feature of the nutrition shakes of this invention is that a not insignificant portion of their protein content is composed of intact brown rice protein. Concentrations of intact brown rice protein as low as about 5 wt.% and as high as 80 wt.% are contemplated, these percents being based on total protein. More typically, the inventive nutrition shakes will contain 10 to 70 wt.% intact brown rice protein, based on total protein. Even more typically, the inventive nutrition shakes will contain 10 to 60 wt.%, 15 to 50 wt.% or even 20 to 40 wt.%, intact brown rice protein based on total protein. Nutrition shakes containing 5 to 25 wt.%, 10 to 25 wt.%, 10 to 15 wt.%, and 5 to 10 wt.% intact pea protein based on total protein are also contemplated.

Desirably, the milk protein sources used to formulate the nutrition shakes of this first aspect of the invention will be selected so that the ratio of whey protein to casein in these nutrition shakes is 0.375:1 or less. For example, at least 80 wt.% of the milk protein in the inventive nutrition shakes can be supplied in the form of a natural milk protein concentrate (MPC) containing 70 to 90 wt.% milk proteins and a whey protein/casein protein ratio between 10:90 and 30:70. In particular embodiments of the first aspect of this invention, the ratio of whey protein to casein in the inventive nutrition shakes will be 0.35:1 or less, 0.30:1 or less, or even 0.25:1 or less.

In examples of nutrition shakes made in accordance with this invention, at least 90 wt.% of the milk protein in the inventive nutrition shake will be supplied in the form of a natural milk protein concentrate containing 75 to 83 wt.% protein and a whey protein/casein ratio between 10:90 and 20:80.

In still other embodiments of this invention, the protein content of the inventive nutrition shakes will be formulated to contain (a) 15 to 30 wt.% milk protein, (b) 5 to 70 wt.% intact brown rice protein, (c) 10 to 15 wt.% intact pea protein, and (d) 40 to 63 wt.% intact soy protein.

In yet other embodiments of this invention, the protein content of the inventive nutrition shakes will be formulated to contain (a) 20 to 30 wt.% milk protein, (b) 5 to 20 wt.% or 10 to 20 wt.% intact brown rice protein, (c) 10 to 15 wt.% intact pea protein, and (d) 40 to 58 wt.% intact soy protein.

As indicated above, the primary source of milk proteins in the nutrition shakes of this invention desirably is milk protein concentrate (MPC), i.e., a product which has an average protein content of 70 to 90 wt.% and which has a natural whey protein/casein ratio between 10:90 and 30:70. Normally, these products are available in the form of a powder prepared by ultrafiltration. Preferred milk protein concentrates have an average protein content of 75 to 85 wt.%, and a natural whey protein/casein ratio between 10:90 and 20:80. MPC is a preferred source of milk protein because it is relatively inexpensive, readily available, has a preferred flavor profile, and exhibits a beneficial effect on product stability. In addition, it already exhibits a natural distribution of whey protein and casein, *e.g*., 20/80 on a weight basis.

Although other sources of milk proteins can also be used in these nutrition shakes, the total amount of these other milk protein sources is desirably ≤ 20 wt.%, more preferably ≤ 10 wt.%, or even ≤ 5 wt.%, of the total amount of MPC in the composition. In some embodiments, no additional source of milk protein is used. In any event, regardless of the type and amount of additional milk protein sources used, if any, care must be taken to insure that the ratio of whey protein to casein in the inventive nutrition shakes ultimately obtained does not exceed 0.375:1, as indicated above.

Normally, the vegetable proteins in the nutrition shakes of this invention will be composed of intact brown rice protein, intact pea protein and intact soy protein. However, as indicated above, other vegetable proteins (both intact and hydrolyzed) can also be used. If so, the total amount of these other vegetable proteins is desirably ≤ 20 wt.%, more preferably ≤ 10 wt.%, or event ≤ 5 wt.%, of the combined amounts of intact soy protein plus these other vegetable proteins in the inventive nutrition shakes. In some embodiments, no additional intact vegetable proteins are used, and in still other embodiments no additional vegetable proteins whether intact or hydrolyzed are used.

Most conveniently, the pea protein used to make the inventive nutrition shakes will be supplied in the form of a pea protein concentrate (PPC) containing 78 to 90 wt.% pea protein, the soy protein will be supplied in the form of a concentrated soy protein product (CSPP) containing 70 to 90 wt.% soy proteins, the brown rice protein will be supplied in the form of concentrated brown rice protein product (CBRPP) containing 70 to 90 wt.% brown rice protein and the milk protein will be supplied in the form of a milk protein concentrate (MPC) having an average protein content of 75 to 85 wt.% and a natural whey protein/casein ratio between 10:90 and 20:80.

In a particular example of a nutrition shake made in accordance with this invention, the protein content of the inventive nutrition shake comprises 26 wt.% intact soy protein, 14 wt.% intact pea protein, 10 wt.% intact brown rice protein and 50 wt.% milk protein. In another particular example, the protein content of the nutrition shake comprises 26 wet.% intact soy protein, 14 wt.% intact pea protein, and 60 wt.% intact brown rice protein.

From the foregoing, it can be seen that nutrition shakes at least as desirable as, and in many instances more desirable than, their commercial counterparts can be obtained in accordance with this invention even though they contain a substantial amount of the combination of intact brown rice protein and intact pea protein as well as a reduced amount of milk protein relative to current commercial practice, and even though all of their milk protein is supplied by commercially available milk protein concentrates having a whey protein/casein ratio essentially the same as whole milk, 0.2/0.8 (0.25:1). This is especially surprising in light of WO 2010/126362 A1, which wholly fails to address hedonic properties, which expresses a clear preference for supplying its whey protein and casein components in the form of separate powders, and which teaches that substantially elevated whey protein/casein ratios of 1.0 and more are needed to accommodate vegetable protein concentrations exceeding 30% of total protein.

## Claims

1. A nutritional composition comprising a carbohydrate component in an amount of from 5.0% to 65% by weight, a fat component in an amount of from 1.0% to 20% by weight, and a protein component in an amount of from 1.0% to 20% by weight, these percents being based on the weight of the nutritional composition as a whole, wherein the protein component comprises
(i) 10 to 60 wt.% milk protein,
(ii) at least 5 wt.% intact brown rice protein,
(iii) 10 to 25 wt.% intact pea protein, and
(iv) a protein remainder comprising intact soy protein, these percents being based on total protein, wherein the combined amounts of intact brown rice protein (ii) plus the protein remainder (iv) comprises 40 to 80% of total protein.

2. The nutritional composition of claim 1, wherein at least 55 wt.% of the protein remainder, is composed of intact soy protein.

3. The nutritional composition of claim 2, wherein at least 70 wt.% of the protein remainder, is composed of intact soy protein.

4. The nutritional composition of any one of claims 2 or 3, wherein the protein component comprises 10 wt.% to 75 wt.% intact brown rice protein and 10 to 15 wt.% intact pea protein.

5. The nutritional composition of claim 2, wherein the ratio of whey protein to casein in the nutritional composition is 0.375:1 or less.

6. The nutritional composition of claim 5, wherein at least 80 wt.% of the milk protein in the nutritional composition is supplied in the form of a natural milk protein concentrate (MPC) containing 70 to 90 wt.% milk proteins and a whey protein/casein protein ratio between 10:90 and 30:70.

7. The nutritional composition of any one of claims 2, 3, 5 or 6, wherein, the protein content of the nutritional composition comprises (a) 15 to 30 wt.% milk protein, (b) 10 to 70 wt.% intact brown rice protein, (c) 12 to 20 wt.% intact pea protein, and (d) 40 to 63 wt.% intact soy protein.

8. The nutritional composition of claim 7, wherein the protein content of the nutritional composition comprises (a) 20 to 30 wt.% milk protein, (b) 10 to 20 wt.% intact brown rice protein, (c) 12 to 20 wt.% intact pea protein, and (d) 40 to 58 wt.% intact soy protein.

9. The nutritional composition of any one of claims 1 to 8, wherein the nutritional composition exhibits a grain factor of < 2.

10. The nutritional composition of any one of claims 2, 3, 5, 6 or 9, wherein the pea protein in the nutritional composition is supplied in the form of a pea protein concentrate (PPC) containing 78 to 90 wt.% pea protein, the soy protein in the nutritional composition is supplied in the form of a concentrated soy protein product (CSPP) containing 60 to 90 wt.% soy protein.

## Patentansprüche

1. Nahrungsmittelzusammensetzung, die eine Kohlenhydratkomponente in einer Menge von 5,0 bis 65 Gew.-%, eine Fettkomponente in einer Menge von 1,0 bis 20 Gew.-% und eine Proteinkomponente in einer Menge von 1,0 bis 20 Gew.-% enthält, wobei sich diese prozentualen Mengenanteile auf die Nahrungsmittelzusammensetzung als Ganzes beziehen, wobei die Proteinkomponente aufweist:
(i) 10 bis 60 Gew.-% Milchprotein,
(ii) mindestens 5 Gew.-% intaktes Reisprotein aus braunem Reis,
(iii) 10 bis 25 Gew.-% intaktes Erbsenprotein, und
(iv) einen Proteinrest, der intaktes Sojaprotein umfasst, wobei sich die prozentualen Mengenanteile auf das Gesamtprotein beziehen, und
wobei die aus dem intakten Reisprotein aus braunem Reis (ii) und dem Proteinrest (iv) gebildete Gesamtmenge 40 bis 80 % des Gesamtproteins ausmacht.

2. Nahrungsmittelzusammensetzung nach Anspruch 1, wobei mindestens 55 Gew.-% des Proteinrests aus intaktem Sojaprotein bestehen.

3. Nahrungsmittelzusammensetzung nach Anspruch 1, wobei mindestens 70 Gew.-% des Proteinrests aus intaktem Sojaprotein bestehen.

4. Nahrungsmittelzusammensetzung nach einem der Ansprüche 2 oder 3, wobei die Proteinkomponente 10 bis 75 Gew.-% intaktes Reisprotein aus braunem Reis und 10 bis 15 Gew.-% intaktes Erbsenprotein umfasst.

5. Nahrungsmittelzusammensetzung nach Anspruch 2, wobei das Verhältnis von Molkenprotein zu Casein in der Nahrungsmittelzusammensetzung 0,375:1 oder weniger beträgt.

6. Nahrungsmittelzusammensetzung nach Anspruch 5, wobei mindestens 80 Gew.-% des Milchproteins in der Nahrungsmittelzusammensetzung in Form eines natürlichen Milchproteinkonzentrates (MPC) eingebracht werden, das 70 bis 90 Gew.-% Milchproteine enthält und ein Molkenprotein/Casein-Verhältnis von 10:90 bis 30:70 aufweist.

7. Nahrungsmittelzusammensetzung nach einem der Ansprüche 2, 3, 5 oder 6, wobei der Proteinanteil der Nahrungsmittelzusammensetzung (a) 15 bis 30 Gew.-% Milchprotein, (b) 10 bis 70 Gew.-% intaktes Reisprotein aus braunem Reis, (c) 12 bis 20 Gew.-% intaktes Erbsenprotein und (d) 40 bis 63 Gew.-% intaktes Sojaprotein umfasst.

8. Nahrungsmittelzusammensetzung nach Anspruch 7, wobei der Proteinanteil der Nahrungsmittelzusammensetzung (a) 20 bis 30 Gew.-% Milchprotein, (b) 10 bis 20 Gew.-% intaktes Reisprotein aus braunem Reis, (c) 12 bis 20 Gew.-% intaktes Erbsenprotein und (d) 40 bis 58 Gew.-% intaktes Sojaprotein umfasst.

9. Nahrungsmittelzusammensetzung nach einem der Ansprüche 1 bis 8, wobei die Nahrungsmittelzusammensetzung einen Kornfaktor < 2 aufweist.

10. Nahrungsmittelzusammensetzung nach einem der Ansprüche 2, 3, 5, 6 oder 9, wobei das Erbsenprotein in die Nahrungsmittelzusammensetzung in Form eines Erbsenproteinkonzentrats (PPC) mit 78 bis 90 Gew.-% Erbsenprotein und das Sojaprotein in die Nahrungsmittelzusammensetzung in Form eines konzentrierten Sojaproteinprodukts (CSPP) mit 60 bis 90 Gew.-% Sojaprotein eingebracht wird.

## Revendications

1. Composition nutritionnelle comprenant un composant glucidique en une quantité allant de 5,0 % à 65 % en poids, un composant lipidique en une quantité allant de 1,0 % à 20 % en poids, et un composant protéique en une quantité allant de 1,0 % à 20 % en poids, ces pourcentages étant basés sur le poids de la composition nutritionnelle dans son ensemble, où le composant protéique comprend
(i) 10 à 60 % en poids de protéine de lait,
(ii) au moins 5 % en poids de protéine de riz brun intacte,
(iii) 10 à 25 % en poids de protéine de pois intacte, et
(iv) un reste de protéine comprenant une protéine de soja intacte, ces pourcentages étant basés sur les protéines totales, où les quantités combinées de protéine de riz brun intacte (ii) plus le reste de protéine (iv) comprennent 40 à 80 % de protéines totales.

2. Composition nutritionnelle de la revendication 1, dans laquelle au moins 55 % en poids du reste de protéine, sont constitués de protéine de soja intacte.

3. Composition nutritionnelle de la revendication 2, dans laquelle au moins 70 % en poids du reste de protéine, sont constitués de protéine de soja intacte.

4. Composition nutritionnelle de l'une quelconque des revendications 2 et 3, dans laquelle le composant protéique comprend 10 % en poids à 75 % en poids de protéine de riz brun intacte et 10 à 15 % en poids de protéine de pois intacte.

5. Composition nutritionnelle de la revendication 2, dans laquelle le rapport de la protéine de lactosérum sur la caséine dans la composition nutritionnelle est inférieur ou égal à 0,375:1.

6. Composition nutritionnelle de la revendication 5, dans laquelle au moins 80 % en poids de la protéine de lait dans la composition nutritionnelle sont fournis sous forme d'un concentré de protéine de lait naturelle (MPC) contenant 70 à 90 % en poids de protéines de lait et un rapport protéine de lactosérum/protéine de caséine compris entre 10:90 et 30:70.

7. Composition nutritionnelle de l'une quelconque des revendications 2, 3, 5 et 6, dans laquelle la teneur en protéine de la composition nutritionnelle comprend (a) 15 à 30 % en poids de protéine de lait, (b) 10 à 70 % en poids de protéine de riz brun intacte, (c) 12 à 20 % en poids de protéine de pois intacte, et (d) 40 à 63 % en poids de protéine de soja intacte.

8. Composition nutritionnelle de la revendication 7, dans laquelle la teneur en protéine de la composition nutritionnelle comprend (a) 20 à 30 % en poids de protéine de lait, (b) 10 à 20 % en poids de protéine de riz brun intacte, (c) 12 à 20 % en poids de protéine de pois intacte, et (d) 40 à 58 % en poids de protéine de soja intacte.

9. Composition nutritionnelle de l'une quelconque des revendications 1 à 8, dans laquelle la composition nutritionnelle présente un facteur de grain < 2.

10. Composition nutritionnelle de l'une quelconque des revendications 2, 3, 5, 6 et 9, dans laquelle la protéine de pois dans la composition nutritionnelle est fournie sous forme d'un concentré de protéine de pois (PPC) contenant 78 à 90 % en poids de protéine de pois, la protéine de soja dans la composition nutritionnelle est fournie sous forme d'un produit de protéine de soja concentré (CSPP) contenant 60 à 90 % en poids de protéine de soja.
